# NEUE EUROPÄISCHE PATENTSCHRIFT

(11) **EP 2 782 705 B2**
(45) Veröffentlichungstag und Bekanntmachung des Hinweises auf die Entscheidung über den Einspruch: **08.03.2023**
(45) Hinweis auf die Patenterteilung: 13.09.2017
(21) Anmeldenummer: 12783860.5
(22) Anmeldetag: 13.10.2012
(51) Int. Cl.: B23K 26/34, B22F 3/105, B28B 1/00, B23P 15/04

(54) **VERFAHREN ZUM GENERATIVEN HERSTELLEN EINES BAUTEILS UNTER VERWENDUNG EINES LASERSTRAHLES VOR, WÄHREND UND NACH DEM VERBINDEN**
METHOD OF GENERATIVE PRODUCING A COMPONENT USING A LASER BEAM BEFORE, DURING AND AFTER THE ASSEMBLY
PROCÉDÉ DE PRODUCTION ADDITIVE D'UN ÉLÉMENT STRUCTURAL AU MOYEN D'UN FAISCEAU LASER AVANT, PENDANT ET APRÈS L'ASSEMBLAGE

(30) Priorität: 22.11.2011 DE 102011086889
(43) Veröffentlichungstag der Anmeldung: 01.10.2014
(73) Patentinhaber: MTU Aero Engines AG, 80995 München (DE)
(72) Erfinder: SATZGER, Wilhelm, 80807 München (DE); SIKORSKI, Siegfried, 80997 München (DE); HESS, Thomas, 81541 München (DE); DUSEL, Karl-Heinz, 85716 Unterschleissheim (DE); MELZER, Hans-Christian, 85305 Jetzendorf (DE)
(74) Vertreter: Wallinger Ricker Schlotter Tostmann
(86) Internationale Anmeldenummer: PCT/DE2012/001000
(87) Internationale Veröffentlichungsnummer: WO 2013/075683

(56) Entgegenhaltungen:
- EP-A1- 1 400 339
- EP-A1- 1 815 936
- EP-A1- 2 119 530
- WO-A2-2010/061174
- DE-A1- 10 309 519
- DE-U1-202008 013 569
- US-A- 5 508 489

## Beschreibung

Die Erfindung betrifft ein Verfahren zum generativen Herstellen eines Bauteils, insbesondere eines Turbomaschinenbauteils, wobei schichtweise Werkstoff (4) selektiv miteinander, mit einer darunter liegenden Schicht und/oder mit einem Träger (6) verbunden wird (siehe, z.B., EP1 400 339 A1). Bei generativen Verfahren wird Werkstoff schichtweise und selektiv mit einer darunter liegenden Schicht oder einem Träger verbunden. Auf diese Weise können auch komplexe Bauteile und kleinere Losgrößen vorteilhaft hergestellt werden. Ein beispielsweise aus der DE 10 2005 025 199 A1 bekanntes generatives Verfahren ist insbesondere das Lasersintern, bei dem die einzelnen Partikel des losen Werkstoffes durch einen Laser thermisch miteinander verbunden werden. Die DE 43 19 000 C1 schlägt alternativ ein Verschweißen der Partikel durch MIG- oder Plasmaschweißen vor.

Nachteilig liegen Werkstoffeigenschaften, insbesondere Festigkeit, Zähigkeit, Elastizität, Oberflächenhärte und dergleichen, von solcherart gefertigten Bauteilen üblicherweise nur zwischen denen von Guß- und von Schmiedeteilen aus dem gleichen Werkstoff. Insbesondere an Werkstoffeigenschaften von Gasturbinenbauteilen, etwa Leit- oder Laufschaufel, werden jedoch hohe Anforderungen gestellt, wie sie beispielsweise erst von geschmiedeten Bauteilen erfüllt werden.

Aus der DE 20 2008 013 569 U1 ist eine Einrichtung zum Aufbringen von Schichtstrukturen auf ein Substrat mittels Laserauftragsschweißen bekannt. In einem steuernden Datenverarbeitungssystem sind hierzu Laser, Scanner und Zufuhrvorrichtung zusammen geschaltet.

Aus derEP 1 815 936 A1 ist ein Verfahren sowie eine Vorrichtung zur Durchführung dieses Verfahrens bekannt, wobei während des Verfahrens das Objekt und die Struktur getestet und analysiert wird. Hierzu wird das Pulvermaterial einer Schicht vor dem Auftrag einer neuen Schicht analysiert.

Aus der EP 1 400 339 A1 ist ein Verfahren zur Herstellung eines dreidimensionalen Formkörpers bekannt, wobei hier klassisch durch Verbinden einzelner Pulverschichten durch Lasereintrag ein dreidimensionaler Formkörper beschaffen wird.

Die DE 10 2005 025 199 A1 und DE 43 19 000 C1 schlagen jeweils eine mechanisch kontaktierende Verdichtung des losen Werkstoffes vor dem Lasersintern bzw. Schweißen vor. Dies setzt jedoch eine Druckbeaufschlagung in unmittelbarer Nähe der zu verbindenden Werkstoffbereiche voraus, was apparativ problematisch sein kann.

Aufgabe der vorliegenden Erfindung ist es, die generative Herstellung von Bauteilen zu verbessern.

Diese Aufgabe wird durch ein Verfahren mit den Merkmalen des Anspruchs 1 gelöst. Vorteilhafte Weiterbildungen sind Gegenstand der Unteransprüche.

Gemäß der vorliegenden Erfindung wird ein Bauteil generativ hergestellt, indem Werkstoff schichtweise und selektiv miteinander, mit einer darunter liegenden Schicht und/oder mit einem Träger verbunden wird. Der unverbundene Werkstoff wird hierzu in der gewünschten Schichthöhe über der darunter liegenden Schicht bzw. dem Träger angeordnet, vorzugsweise als loses Gut, insbesondere in Pulverform, oder auch als Lösung in einem Fluid. Dann wird der Werkstoff selektiv in der Form des gewünschten Schichtquerschnitts des herzustellenden Bauteils miteinander, d.h. innerhalb des herzustellenden Schichtquerschnittes in sich, und gegebenenfalls mit einer darunter liegenden Schicht oder einem Träger verbunden und dabei verfestigt. Dies kann gleichermaßen chemisch, etwa durch Reaktion von Bindemitteln, oder thermisch, insbesondere durch Sintern, Schmelzen, Verschweißen und dergleichen, erfolgen. Die selektive Verbindung des Werkstoffes miteinander, d.h. seine selektive, lokale Verfestigung, kann in gleicher Weise erfolgen wie die Verbindung des Werkstoffes mit der darunter liegenden Schicht oder dem Träger.

Die selektive Verbindung kann gleichermaßen durch eine selektive Anordnung von Werkstoff nur im Bereich des gewünschten Schichtquerschnitts oder durch selektive Beaufschlagung des Werkstoffes, etwa durch ein chemisches Agens, eine Belichtung und/oder Erwärmung, nur im Bereich des gewünschten Schichtquerschnitts erfolgen. Die selektive Beaufschlagung kann gleichermaßen durch Maskieren nicht zu beaufschlagender Bereiche oder durch lokales, gesteuertes Beaufschlagen mit einem gerichteten Beaufschlagungsbereich, insbesondere -strahl, erfolgen. In einer bevorzugten Ausführung wird der Werkstoff selektiv durch einen gesteuerten Laserstrahl verbunden, indem der Laserstrahl den gewünschten Schichtquerschnitt belichtet und dabei den Werkstoff soweit erwärmt, dass dessen Partikel sich miteinander und mit der darunter liegenden Schicht bzw. dem Träger verbinden, oder eine chemische Reaktion eines Bindemittels auslöst.

Erfindungsgemäß wird nun vor, während und nach dem Verbinden der Werkstoff zusätzlich mit einem Laser beaufschlagt. Durch eine gepulste Beaufschlagung ist es insbesondere möglich, Körperschallwellen, vorzugsweise Ultraschallwellen, direkt im Werkstoff zu erzeugen. Solche Körperschallwellen können als Transversal- und/oder Longitudinalwellen ausgebildet sein. Vorzugsweise pflanzen sie sich als Kugelwellen konzentrisch um einen Auftreffpunkt eines Laserstrahls auf den Werkstoff durch diesen fort. Indem die Körperschallwellen durch den gepulsten Laser im Werkstoff erzeugt werden, wird es möglich, die Wellen ohne großen apparativen Aufwand insbesondere auch in unmittelbarer Nähe zu dem Ort zu bewirken, an dem der Werkstoff verfestigt und gegebenenfalls mit der darunter liegenden Schicht oder dem Träger verbunden wird, indem der gepulste Laserstrahl, beispielsweise durch eine entsprechende Optik, Lichtleiter oder dergleichen, hierhin gerichtet wird. Zusätzlich oder alternativ kann durch die zusätzliche Laserbeaufschlagung auch Werkstoff vor, während und/oder nach dem Verbinden sublimiert werden. Der dabei durch die Ausdehnung des sublimierten Werkstoffes erzeugte Druckstoß kann insbesondere die vorstehend erläuterten Körperschallwellen induzieren.

Vorteilhafterweise werden durch die erfindungsgemäße Beaufschlagung Eigenspannungen, insbesondere Druckspannungen im Werkstoff erzeugt und/oder die Anzahl von Versetzungen in einem Werkstoffgitter, insbesondere Metallgitter, erhöht, was die Werkstoffeigenschaften, insbesondere die Festigkeit und die Korngröße, verbessern kann.

Die zusätzliche Beaufschlagung kann während des Verbindens des Werkstoffes erfolgen. Insbesondere, wenn die Verbindung thermisch bewirkt wird, können in dem hierzu erwärmten, formbaren, vorzugsweise wenigstens teilweise plastifizierten oder verflüssigten, Werkstoff die Körperschallwellen die oben erläuterten Gefügeänderungen und Eigenspannungen bewirken. Zusätzlich oder alternativ kann, wie beispielsweise auch beim Kaltschmieden, der bereits verbundene und gegebenenfalls vollständig oder teilweise abgekühlte Werkstoff durch den Laser zusätzlich beaufschlagt werden, wobei vorzugsweise wiederum durch Sublimation bzw. Körper-, insbesondere Ultraschall, noch Gefügeveränderungen und Eigenspannungen erzeugt werden können. Zusätzlich oder alternativ kann auch der Werkstoff vor dem Verbinden durch den Laser zusätzlich beaufschlagt werden, wodurch insbesondere ein loses Gut, insbesondere ein Pulver, oder eine Lösung homogenisiert und verdichtet werden kann. In einer bevorzugten Ausführung, in der der Werkstoff zum Verbinden, insbesondere durch einen Laser, auf eine Maximaltemperatur erwärmt wird, erfolgt die zusätzliche Beaufschlagung in einem Zeitraum, in dem der Werkstoff wenigstens 50%, insbesondere wenigstens 75% und bevorzugt wenigstens 90% dieser Maximaltemperatur aufweist.

Sofern das Verbinden bereits durch Beaufschlagung mit einem Laser, insbesondere ausreichende Erwärmung des zu verbindenden Werkstoffes, erfolgt, kann der Werkstoff durch diesen Laser zusätzlich vor und nach dem Verbinden beaufschlagt werden. Hierzu kann in einer bevorzugten Ausführung der Laser zum Verbinden und zum zusätzlichen Beaufschlagen unterschiedlich angesteuert, insbesondere fokussiert, werden und/oder den Werkstoff mit unterschiedlicher Leistung beaufschlagen. Vorzugsweise wird der Laser wenigstens zur zusätzlichen Beaufschlagung gepulst.

In einer bevorzugten Ausführung sind wenigstens zwei Laser vorgesehen, die vorzugsweise im Parallelbetrieb auch eine zusätzliche Beaufschlagung des Werkstoffes während seines Verbindens mit der darunter liegenden Schicht bzw. dem Träger ermöglichen können. Gleichermaßen ist es, wie vorstehend erläutert, möglich, den Laser zwischen dem Erwärmen zum Verbinden und dem, vorzugsweise gepulsten, zusätzlichen Beaufschlagen, insbesondere zur Erzeugung von Körperschallwellen und/oder Sublimation von Werkstoff, ein- oder mehrfach umzuschalten.

Insbesondere, wenn zur zusätzlichen Beaufschlagung ein eigener Laser vorgesehen ist, kann dieser in einer bevorzugten Weiterbildung zur Nachbearbeitung einer verbundenen Werkstoffschicht genutzt werden. Insbesondere kann dieser Laser die verbundene Werkstoffschicht konturieren bzw. nachkonturieren, indem an wenigstens einem Außen- und/oder Innenrand dieser Schicht Material abgetragen wird. Während die Ränder der generativ urgeformten Werkstoffschicht durch die Werkstoffpartikelgröße bedingte Unregelmäßigkeiten aufweisen, kann durch eine Laserkonturierung ein glatterer Rand erzeugt werden. Zusätzlich wird durch den Laser die Werkstoffschicht oberflächenveredelt, insbesondere poliert, insbesondere, indem über ihrer Oberfläche, wenigstens bereichsweise, Material abgetragen wird.

Mit besonderem Vorteil können Gasturbinenbauteile erfindungsgemäß hergestellt werden, bei denen trotz komplexer Formgebung hohe Anforderungen an die Werkstoffeigenschaften gestellt werden.

Weitere Merkmale und Vorteile ergeben sich aus den Unteransprüchen und dem Ausführungsbeispiel. Hierzu zeigt, teilweise schematisiert, die einzige:

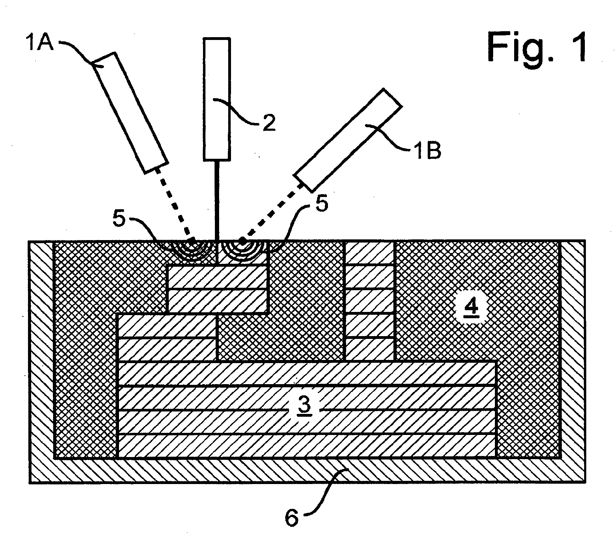

Fig. 1 das Herstellen eines Bauteils mit einer Vorrichtung, die in dem Verfahren der vorliegenden Erfindung verwendet werden kann.
Fig. 1 zeigt eine Vorrichtung mit einem Werkstoffbehälter mit integral damit ausgebildetem Träger 6, in dem ein Metallwerkstoff 4, beispielsweise eine Aluminiumlegierung, als loses Gut in Pulverform angeordnet ist.

Eine Laseranordnung umfasst einen Verbindungslaser 2 und wenigstens einen der beiden zusätzlichen Laser 1A, 1B. Diese beiden sind zur kompakteren Darstellung nachfolgend näher erläuterter Ausführungsformen gemeinsam in einer Figur dargestellt, wobei in nicht dargestellten Abwandlungen die Laseranordnung nur die Laser 1A und 2, nur die Laser 1B und 2 oder nur den Laser 2 aufweisen kann, der dann abwechselnd als Laser zum Verbinden und als Laser zum zusätzlichen Beaufschlagen betrieben wird.

Werkstoffbehälter und Laseranordnung sind durch eine nicht dargestellte Bewegungseinrichtung relativ zueinander bewegbar. Zur generativen Herstellung eines komplexen Bauteils 3 wird zunächst auf dem Träger 6 Werkstoffpulver 4 in einer vorgegebenen Schichthöhe, beispielsweise im Bereich zwischen 0,05 mm bis 5 mm, angeordnet. Dann beaufschlagt der Verbindungslaser 2 diese Schicht selektiv in den Bereichen des gewünschten Bauteilstirnquerschnitts. Das dabei erwärmte Metallpulver 4 verbindet sich in den beaufschlagten Bereichen durch Sintern oder Verschmelzen miteinander und vorzugsweise zur Fixierung auch mit dem Träger 6 und bildet so eine feste erste Werkstoffschicht. Anschließend werden Werkstoffbehälter und Laseranordnung um eine Schichthöhe voneinander entfernt und Werkstoffpulver in dieser Schichthöhe auf der darunter liegenden Werkstoffschicht angeordnet. Nun beaufschlagt wiederum der Verbindungslaser 2 diese Schicht selektiv in den Bereichen des gewünschten Bauteilschichtquerschnitts. Das dabei erwärmte Metallpulver 4 verbindet sich in den beaufschlagten Bereichen durch Sintern oder Verschmelzen miteinander und mit der darunter liegenden Schicht und bildet so eine nächste feste Werkstoffschicht. Dieser Vorgang wird wiederholt, bis das Bauteil 3 schichtweise aus dem Werkstoff 4 aufgebaut worden ist. Fig. 1 zeigt einen Zustand, in dem eine oberste Werkstoffschicht gerade selektiv durch den Verbindungslaser 2 mit der darunter liegenden Werkstoffschicht verbunden wird. Anschließend kann der überschüssige, nicht verbundene Werkstoff entfernt und das Bauteil 3 vom Träger 6 getrennt werden. Die Laseranordnung umfasst zusätzlich zum Verbindungslaser 2 den zusätzlichen Laser 1A. Dieser beaufschlagt das Werkstoffpulver 4 in der gerade bearbeitenden Schicht unmittelbar, bevor der Verbindungslaser diesen Bereich erwärmt, pulsförmig, wie in Fig. 1 durch einen strichlierten Strahl angedeutet. Wo der gepulste Strahl auf das lose, noch unverbundene Werkstoffpulver trifft, erwärmt sich dieses punktförmig schlagartig, in einer bevorzugten Ausführung unter Sublimation von Werkstoff. Die daraus folgende Ausdehnung erzeugt direkt im Werkstoff 4 konzentrische Kugelwellen 5, die das Werkstoffpulver unmittelbar vor seiner Verbindung mit der darunter liegenden Schicht durch den Verbindungslaser 2 verdichten und homogenisieren. Bevorzugt erfolgt die gepulste Beaufschlagung mit einer Frequenz, die Körperschallwellen 5 im Ultraschallbereich erzeugt. Die Laseranordnung umfasst zusätzlich zum Verbindungslaser 2 den zusätzlichen Laser 1B. Dieser beaufschlagt den miteinander und mit der darunter liegenden Schicht sich verbindenden oder verbundenen Werkstoff während bzw., vorzugsweise unmittelbar, nachdem der Verbindungslaser diesen Bereich erwärmt, pulsförmig. Wo der gepulste Strahl auf den bereits verbundenen oder sich gerade verbindenden Werkstoff trifft, der gegebenenfalls noch stark erwärmt ist, erwärmt sich dieser nochmals, diesmal punktförmig und schlagartig, in einer bevorzugten Ausführung unter Sublimation von Werkstoff. Die daraus folgende Ausdehnung erzeugt direkt im noch formbaren oder bereits wieder erkalteten Werkstoff 4 wiederum konzentrische Kugelwellen 5, vorzugsweise im Ultraschallbereich, die nun Eigenspannungen in der Werkstoffschicht aufprägen und deren Gefüge verändern, insbesondere die Art und/oder Anzahl von Versetzungen. Auf diese Weise können die Werkstoffeigenschaften, insbesondere die Festigkeit, des hergestellten Bauteils parallel zu seinem schichtweisen Aufbau oder in unmittelbarer zeitlicher Nähe und damit besonders vorteilhaft verbessert werden.

Der zusätzliche Laser 1B kann zusätzlich auch die Oberfläche und/oder die Ränder der durch den Verbindungslaser 2 verbundenen Werkstoffschicht nachbearbeiten, insbesondere durch Materialabtrag konturieren und/oder polieren.

Beide vorgenannten Ausführungsformen können auch dadurch realisiert werden, dass der Laser 2 abwechselnd als Verbindungslaser zum Verbinden von Werkstoff miteinander und mit der darunter liegenden Schicht bzw. dem Träger und als zusätzlicher Laser zur Erzeugung von Körperschallwellen genutzt und hierzu entsprechend umgeschaltet bzw. -steuert wird. Dabei kann im Betrieb als zusätzlicher Laser eine andere Emitterform, insbesondere eine gepulste Emittierung, eine andere, insbesondere höhere, Strahlungsleistung und/oder ein anderer Auftreffbereich auf dem Werkstoff vorgesehen sein.

### Bezugszeichenliste

- 1A, 1B: zusätzlicher Laser
- 2: Verbindungslaser
- 3: Bauteil
- 4: Werkstoffpulver
- 5: Körperschallwellen
- 6: Träger

## Patentansprüche

1. Verfahren zum generativen Herstellen eines Bauteils (3), insbesondere eines Turbomaschinenbauteils, wobei schichtweise Werkstoff (4) selektiv miteinander, mit einer darunter liegenden Schicht und/oder mit einem Träger (6) verbunden wird, wobei vor, während und nach dem Verbinden der Werkstoff zusätzlich mit einem Laser (1A; 1B; 2) beaufschlagt wird, wobei eine verbundene Werkstoffschicht durch einen Laser (1A, 1B, 2) konturiert und oberflächenveredelt wird.

2. Verfahren nach Anspruch 1, **dadurch gekennzeichnet, dass** vor, während und nach dem Verbinden durch einen gepulsten Laser Körperschallwellen, insbesondere Ultraschallwellen (5), im Werkstoff (3, 4) erzeugt werden.

3. Verfahren nach einem der vorhergehenden Ansprüche, **dadurch gekennzeichnet, dass** vor, während und nach dem Verbinden durch einen Laser (1A; 1B; 2) Werkstoff (4) sublimiert wird.

4. Verfahren nach einem der vorhergehenden Ansprüche, **dadurch gekennzeichnet, dass** der Werkstoff chemisch und/oder thermisch, insbesondere durch einen Laser (2), verbunden wird.

5. Verfahren nach Anspruch 4, **dadurch gekennzeichnet, dass** derselbe Laser (2) abwechselnd Werkstoff (4) verbindet und den Werkstoff (3,4) vor, während und nach dem Verbinden zusätzlich beaufschlagt, oder dass ein Laser (2) zum Verbinden von Werkstoff und ein zusätzlicher Laser (1A; 1B) zum zusätzlichen Beaufschlagen des Werkstoffes vorgesehen ist.

6. Verfahren nach einem der vorhergehenden Ansprüche, **dadurch gekennzeichnet, dass** der Werkstoff zusätzlich mit dem Laser (1A; 1B; 2) beaufschlagt wird, während seine Temperatur wenigstens 50%, insbesondere wenigstens 75% und vorzugsweise wenigstens 90% einer beim Verbinden erreichten Maximaltemperatur aufweist.

## Claims

1. A method of generatively producing a component (3), in particular a turbo engine component, wherein material (4) is selectively bonded, in a layer by layer manner, to one another, to a subjacent layer and / or to a substrate (6), wherein before, during and after the bonding, the material is additionally impinged upon by a laser (1A ; 1B ; 2), wherein a bonded layer of material is contoured and surface finished by means of a laser (1A , 1B , 2).

2. The method according to claim 1, **characterised in that** before, during and after the bonding, structure-borne sound waves, in particular ultrasound waves (5), are generated in the material (3, 4) by means of a pulsed laser.

3. The method according to any one of the preceding claims, **characterised in that** before, during and after the bonding, material (4) is sublimed by means of a laser (1A ; 1B ; 2).

4. The method according to any one of the preceding claims, **characterised in that** the material is bonded chemically and / or thermally, in particular by means of a laser (2).

5. The method according to claim 4, **characterised in that** the laser (2) alternately bonds material (4) and, before, during and after the bonding, the material (3, 4) is additionally impinged upon by means of the same laser (2), or that one laser (2) is provided for bonding the material and an additional laser (1A ; 1B) is provided for additionally causing the material to be impinged upon.

6. The method according to any one of the preceding claims, **characterised in that** the material is additionally impinged upon by means of the laser (1A ; 1B ; 2) while its temperature is at least 50 %, in particular at least 75 %, and preferably at least 90 % of a maximum temperature that is reached during the bonding.

## Revendications

1. Procédé de fabrication générative d'une pièce (3), en particulier d'une pièce de turbomachine, dans lequel un matériau (4) est relié en couche sélectivement l'un à l'autre ou avec une couche disposée en dessous et / ou avec un support (6), dans lequel avant, pendant et après la liaison, le matériau est sollicité en outre par un laser (1A ; 1B ; 2), dans lequel une couche de matériau liée est contourée et ennoblie en surface par un laser (1A , 1B , 2).

2. Procédé selon la revendication 1, **caractérisé en ce que** avant, pendant et après la liaison, des ondes de bruit structurel, en particulier des ondes d'ultrasons (5) sont produites dans le matériau (3, 4) par un laser pulsé.

3. Procédé selon l'une quelconque des revendications précédentes, **caractérisé en ce que** avant, pendant et après la liaison, le matériau (4) est sublimé par un laser (1A ; 1B ; 2).

4. Procédé selon l'une quelconque des revendications précédentes, **caractérisé en ce que** le matériau est relié chimiquement et / ou thermiquement, en particulier par un laser (2).

5. Procédé selon la revendication 4, **caractérisé en ce que** le même laser (2) relie en alternance le matériau (4) et sollicite en outre le matériau (3, 4) avant, pendant et après la liaison ou un laser (2) est prévu pour relier le matériau et un laser supplémentaire (1A ; 1B) est prévu pour solliciter en outre le matériau.

6. Procédé selon l'une quelconque des revendications précédentes, **caractérisé en ce que** le matériau est sollicité en outre par le laser (1A ; 1B ; 2), pendant que sa température présente au moins 50 %, en particulier au moins 75 % et de préférence au moins 90 % d'une température maximale atteinte lors de la liaison.
